# EUROPEAN PATENT APPLICATION

(11) **EP 4 700 575 A1**
(43) Date of publication of application: **25.02.2026**
(21) Application number: 25180623.8
(22) Date of filing: 04.06.2025
(51) Int. Cl.: G06F 9/50, G06F 11/30, G06F 9/48

(54) **CLUSTER-BASED SCHEDULING METHOD AND APPARATUS, MEDIUM, ELECTRONIC DEVICE, AND PROGRAM PRODUCT**

(30) Priority: 20.08.2024 CN 202411148145
(71) Applicant: Beijing Volcano Engine Technology Co., Ltd., Beijing 100190 (CN)
(72) Inventor: LI, Bing, Beijing, 100028 (CN); SONG, Xinyi, Beijing, 100028 (CN); REN, Yuquan, Beijing, 100028 (CN); LIN, Caixue, Los Angeles, CA 90066 (US); XIANG, Wu, Beijing, 100028 (CN)
(74) Representative: Grünecker Patent- und Rechtsanwälte PartG mbB

(57) **Abstract**

The present disclosure relates to a cluster-based scheduling method and apparatus, a medium, an electronic device, and a program product, which can reduce calculation loss, so that a cluster scheduler can ensure efficient and stable running in a large-scale cluster. The method includes: in response to a current scheduling, obtaining a historical scheduling snapshot generated in a previous scheduling and reading a global timing value corresponding to a cluster during the previous scheduling from the historical scheduling snapshot (S101), where the global timing value is a latest change timing of a node in the cluster during the previous scheduling recorded in chronological order; reading a respective timing value corresponding to each node in the cluster during the current scheduling from a scheduling cache and selecting, using the global timing value as a reference, a target node whose timing value is later than the global timing value in chronological order (S102); and updating the historical scheduling snapshot based on node information of the target node to obtain a scheduling snapshot of the current scheduling (S103).

## Description

### TECHNICAL FIELD

The present disclosure relates to the field of computer technologies and, in particular, to a cluster-based scheduling method and apparatus, a medium, an electronic device, and a program product.

### BACKGROUND

A cluster includes multiple servers that work together. Each of the servers is referred to as a node in the cluster and provides a unified service to the outside, to achieve resource sharing and load balancing.

When performing a scheduling process, a cluster scheduler for a large-scale cluster needs to synchronize all node information currently stored in a scheduling cache to a scheduling snapshot, and then make a final scheduling decision based on the scheduling snapshot. This may lead to a large amount of calculation loss, which may easily cause the cluster scheduler to crash, and further leads to the inability of the scheduling algorithm to operate normally.

### SUMMARY

This Summary is provided to introduce concepts in a simplified form that are described in detail in the following Detailed Description. This Summary is not intended to identify key features or essential features of the claimed technical solutions, nor is it intended to be used to limit the scope of the claimed technical solutions.

In a first aspect, the present disclosure provides a cluster-based scheduling method, including:
in response to a current scheduling, obtaining a historical scheduling snapshot generated in a previous scheduling and reading a global timing value corresponding to a cluster during the previous scheduling from the historical scheduling snapshot, where the global timing value is a latest change timing of a node in the cluster during the previous scheduling recorded in chronological order;
reading a respective timing value corresponding to each node in the cluster during the current scheduling from a scheduling cache and selecting, using the global timing value as a reference, a target node whose timing value is later than the global timing value in chronological order, where the scheduling cache is configured to dynamically update a change timing of each node in the cluster with a change of the cluster; and
updating the historical scheduling snapshot based on node information of the target node to obtain a scheduling snapshot of the current scheduling and scheduling a to-be-scheduled object based on the scheduling snapshot of the current scheduling.

In a second aspect, the present disclosure provides a cluster-based scheduling apparatus, including:
an obtaining module, configured to in response to a current scheduling, obtain a historical scheduling snapshot generated in a previous scheduling and read a global timing value corresponding to a cluster during the previous scheduling from the historical scheduling snapshot, where the global timing value is a latest change timing of a node in the cluster during the previous scheduling recorded in chronological order;
a selection module, configured to read a respective timing value corresponding to each node in the cluster during the current scheduling from a scheduling cache and select, using the global timing value as a reference, a target node whose timing value is later than the global timing value in chronological order, where the scheduling cache is configured to dynamically update a change timing of each node in the cluster with a change of the cluster; and
an update module, configured to update the historical scheduling snapshot based on node information of the target node to obtain a scheduling snapshot of the current scheduling and schedule a to-be-scheduled object based on the scheduling snapshot of the current scheduling.

In a third aspect, the present disclosure provides a non-transitory computer-readable medium having a computer program stored thereon, where the computer program, in response to being executed by a processing apparatus, implements steps of the method according to the first aspect.

In a fourth aspect, the present disclosure provides an electronic device, including:
a storage apparatus having a computer program stored thereon; and
a processing apparatus, configured to execute the computer program in the storage apparatus to implement steps of the method according to the first aspect.

In a fifth aspect, the present disclosure provides a computer program product including a computer program, where the computer program, in response to being executed by a processor, implements steps of the method according to the first aspect.

With the above technical solutions, firstly, in response to a current scheduling, a global timing value corresponding to a cluster during a previous scheduling is read from a historical scheduling snapshot; then, using the global timing value as a reference, a target node whose timing value is later than the global timing value is selected from a scheduling cache in chronological order; and then, a historical scheduling snapshot is updated based on node information of the target node to obtain a scheduling snapshot of the current scheduling, and a to-be-scheduled object is scheduled based on the scheduling snapshot of the current scheduling.

With this method, a respective timing value corresponding to each node in the cluster is recorded in the scheduling cache, and the global timing value is recorded in the historical scheduling snapshot, so that at each snapshot update, incremental update is performed by selecting node information corresponding to a node whose timing value is greater than the global timing value. This can not only improve the update efficiency of the scheduling snapshot, but also reduce calculation loss, so that the cluster scheduler can ensure efficient and stable running in a large-scale cluster and effectively improve the scheduling throughput of the cluster scheduler.

Other features and advantages of the present disclosure will be described in detail in the following detailed description.

### BRIEF DESCRIPTION OF DRAWINGS

The above and other features, advantages, and aspects of embodiments of the present disclosure become more apparent when taken in conjunction with the drawings and with reference to the following detailed description. Throughout the drawings, the same or similar reference numbers refer to the same or similar elements. It should be understood that the drawings are schematic and that parts and elements are not necessarily drawn to scale. In the drawings.
Fig. 1 is a schematic flowchart of a cluster-based scheduling method according to an exemplary embodiment of the present disclosure;
Fig. 2 is a schematic diagram of a process of snapshot update according to an exemplary embodiment of the present disclosure;
Fig. 3 is a schematic diagram of a process of snapshot incremental synchronization according to an exemplary embodiment of the present disclosure;
Fig. 4 is a schematic diagram of a structure of a storage interface according to an exemplary embodiment of the present disclosure;
Fig. 5 is a schematic diagram of a process of updating a node linear list according to an exemplary embodiment of the present disclosure;
Fig. 6 is a schematic diagram of a process of preemption process according to an exemplary embodiment of the present disclosure;
Fig. 7 is a schematic diagram of a process of optimized preemption process according to an exemplary embodiment of the present disclosure;
Fig. 8 is a schematic diagram of an adjustment process of a balanced binary search tree according to an exemplary embodiment of the present disclosure;
Fig. 9 is a block diagram of a structure of a cluster-based scheduling apparatus according to an exemplary embodiment of the present disclosure; and
Fig. 10 is a schematic diagram of a structure of an electronic device according to an exemplary embodiment of the present disclosure.

### DETAILED DESCRIPTION

The embodiments of the present disclosure are described in more detail below with reference to the drawings. Although some embodiments of the present disclosure are shown in the drawings, it should be understood that the present disclosure may be implemented in various forms, and should not be construed as being limited to the embodiments set forth herein. Rather, these embodiments are provided for a more thorough and complete understanding of the present disclosure. It should be understood that the drawings and embodiments of the present disclosure are only for illustrative purposes, and are not intended to limit the protection scope of the present disclosure.

It should be understood that the steps described in the method implementations of the present disclosure may be performed in different orders and/or in parallel. In addition, the method implementations may include additional steps and/or omit performing the illustrated steps. The scope of the present disclosure is not limited in this respect.

As used herein, the term "include/comprise" and its variants are open-ended inclusions, that is, "include/comprise but not limited to". The term "based on" is "based at least in part on". The term "one embodiment" means "at least one embodiment"; the term "another embodiment" means "at least one additional embodiment"; the term "some embodiments" means "at least some embodiments". Related definitions of other terms will be given in the following description.

It should be noted that the concepts of "first" and "second" mentioned in the present disclosure are only used to distinguish between different apparatuses, modules or units, and are not used to limit the order or interdependence of functions performed by these apparatuses, modules or units.

It should be noted that the modifications of "one" and "a plurality of" mentioned in the present disclosure are illustrative and not restrictive, and those skilled in the art should understand that unless the context clearly indicates otherwise, they should be understood as "one or more".

The names of messages or information exchanged between a plurality of apparatuses in the implementations of the present disclosure are only used for illustrative purposes, and are not used to limit the scope of these messages or information.

It should be understood that before using the technical solutions disclosed in the embodiments of the present disclosure, the user should be informed of the type, scope of use, usage scenario, etc. of the personal information involved in the present disclosure through an appropriate manner in accordance with relevant laws and regulations, and the authorization of the user should be obtained.

For example, in response to receiving an active request from the user, prompt information is sent to the user to explicitly prompt the user that the operation requested to be performed will require the acquisition and use of the user's personal information. Therefore, the user can independently select whether to provide personal information to software or hardware such as an electronic device, an application, a server, or a storage medium that performs an operation of the technical solution of the present disclosure based on the prompt information.

As an optional but non-limiting implementation, a manner of sending the prompt information to the user in response to receiving the active request from the user may be, for example, a pop-up window, and the prompt information may be presented in the pop-up window in a text form. In addition, the pop-up window may also carry a selection control for the user to select "agree" or "disagree" to provide personal information to the electronic device.

It should be understood that the above process of notifying and obtaining user authorization is only illustrative and does not constitute a limitation on the implementations of the present disclosure, and other manners that meet relevant laws and regulations may also be applied to the implementations of the present disclosure.

At the same time, it should be understood that the data involved in the technical solution (including but not limited to the data itself, and the acquisition or use of the data) should comply with requirements of corresponding laws, regulations and relevant provisions.

Taking a Kubernetes system as an example, a cluster scheduler is responsible for scheduling of containers, and mainly assigns a Pod (a containerized application, hereinafter referred to as a container for short) to an appropriate Node (a physical machine node) for running. In order to meet different requirements and constraints, the scheduling process is performed based on a series of policies and algorithms, for example, a final scheduling decision is made based on many factors such as availability of resources such as a CPU (Central Processing Unit), a memory and a storage of a node, and affinity and anti-affinity of a Node or a Pod.

The cluster scheduler includes a plurality of sub-modules such as a scheduling cache, a scheduling snapshot, a scheduling queue, a scheduling process, a preemption process, and the like. The scheduling cache is configured to maintain cluster information, and the scheduling queue is configured to maintain all Pods (a group of containers) waiting for scheduling. When the scheduling process starts to work, the cluster information in the scheduling cache needs to be synchronized to the scheduling snapshot, then the Pods in the scheduling queue are scheduled and a scheduling decision is executed based on the scheduling snapshot, and when the scheduling fails, a corresponding preemption behavior is triggered. The above scheduling process is usually performed in a serial manner, so each step may affect the scheduling efficiency.

For example, when performing a snapshot update process from the scheduling cache to the scheduling snapshot in a large-scale cluster, since a large amount of cluster information is saved in the scheduling cache, the information will be fully copied in turn during the snapshot update, which will result in a large amount of calculation. Moreover, the scheduling snapshot saves a linear list of physical nodes provided for a scheduling algorithm, and when the snapshot update is performed, any addition or deletion of a physical node will result in a complete reconstruction of the entire linear list, which will also result in a large amount of calculation. For another example, in the preemption process, the cluster scheduler needs to determine a preempted node and a removed container based on full-scale nodes and through a large amount of calculation logic, which will also result in a large amount of calculation in a large-scale cluster. Therefore, when performing a scheduling process, a cluster scheduler in a large-scale cluster is prone to crash due to a large amount of calculation, which in turn causes a scheduling algorithm to fail to run normally.

In view of this, the present disclosure provides a cluster-based scheduling method and apparatus, a medium, an electronic device, and a program product to solve the above technical problems. It should be understood that the execution body of the cluster-based scheduling method provided by the present disclosure may be the above cluster scheduler, or may be other electronic devices used to perform scheduling control on a cluster, which is not limited by the present disclosure.

The embodiments of the present disclosure are further explained and illustrated below with reference to the drawings.

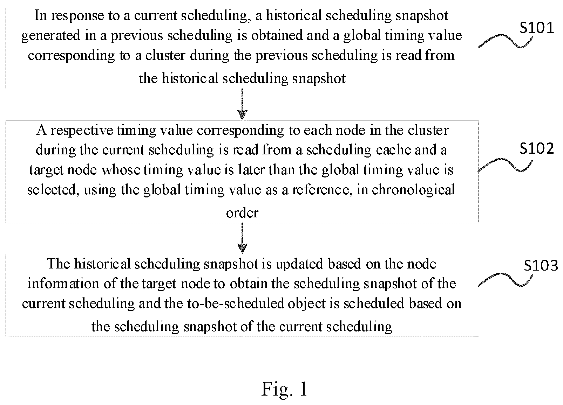

Fig. 1 is a flowchart of a cluster-based scheduling method according to an exemplary embodiment of the present disclosure. Referring to Fig. 1, the method may include the following steps.

S101, in response to a current scheduling, a historical scheduling snapshot generated in a previous scheduling is obtained and a global timing value corresponding to a cluster during the previous scheduling is read from the historical scheduling snapshot.

The global timing value is a latest change timing of a node in the cluster during the previous scheduling recorded in chronological order. Assuming that the previous scheduling includes a node A, a node B, and a node C, where the node C is a latest changed node, the global timing value is a timing value corresponding to the node C.

It should be understood that the historical scheduling snapshot includes node information of all nodes of the cluster in the scheduling cache during the previous scheduling.

S102, a respective timing value corresponding to each node in the cluster during the current scheduling is read from a scheduling cache and a target node whose timing value is later than the global timing value is selected, using the global timing value as a reference, in chronological order.

The scheduling cache is configured to dynamically update a change timing of each node in the cluster with a change of the cluster.

S103, the historical scheduling snapshot is updated based on the node information of the target node to obtain the scheduling snapshot of the current scheduling and the to-be-scheduled object is scheduled based on the scheduling snapshot of the current scheduling.

In a possible implementation, the cluster is a containerized cluster and the to-be-scheduled object is a container object, or the cluster is a virtualized cluster and the to-be-scheduled object is a virtual machine object.

Exemplarily, the cluster-based scheduling method provided by the embodiments of the present disclosure may be applied to a containerized cluster, such as the above Kubernetes system, and may also be applied to a virtualized cluster, which is not limited by the present disclosure.

With the above method, the respective timing value corresponding to each node in the cluster is recorded in the scheduling cache, and the global timing value is recorded in the historical scheduling snapshot, so that at each snapshot update, incremental update is performed by selecting the node information corresponding to the node whose timing value is greater than the global timing value. This can not only improve the update efficiency of the scheduling snapshot, but also reduce the calculation loss, so that the cluster scheduler can ensure efficient and stable running in the large-scale cluster and effectively improve the scheduling throughput of the cluster scheduler.

The process of snapshot update from the scheduling cache to the scheduling snapshot performed by the cluster is described below with embodiments.

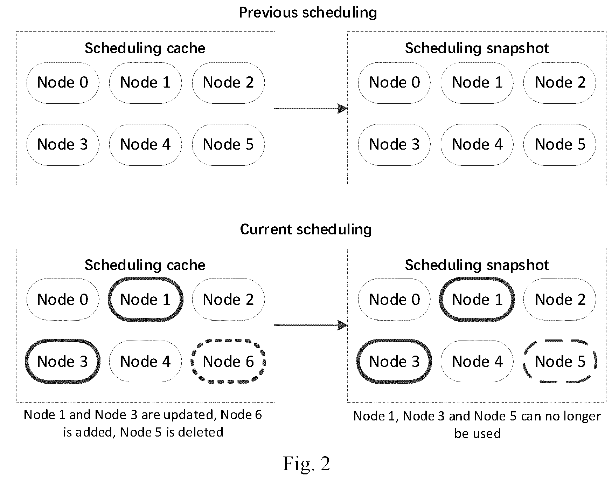

Exemplarily, as shown in Fig. 2, it is assumed that during the previous scheduling process, node information of Node 1 to Node 5 in the scheduling cache has been updated to the scheduling snapshot. When the scheduling process of the current round is initiated, node information of Node 1 and Node 3 in the scheduling cache is updated, node information of Node 5 is deleted, and node information of Node 6 is added.

It should be understood that without special maintenance, it is difficult to perceive what changes have occurred in the node information in the scheduling cache compared with the node information in the scheduling snapshot at a certain time, unless all node information in the scheduling cache and the scheduling snapshot is traversed and compared, where the node changes include node addition, node update, node deletion, etc., which is not limited by the present disclosure.

Therefore, a specific timing may be assigned to each node, and the cluster nodes in the scheduling cache may be maintained in the timing order (such as a descending order of timing). For example, the cluster nodes and their corresponding timing values may be maintained in the form of a list, for example, may be stored in a double-linked list structure, which may be specifically set according to requirements and is not limited by the present disclosure.

It should be noted that different timing values may be assigned to different nodes according to change times, or the same timing value may be assigned to a node that changes within a continuous period of time, as long as timing values corresponding to nodes that change in different rounds of scheduling processes are different.

Exemplarily, the scheduling snapshot may record a timing value corresponding to a latest changed node in the cluster nodes scheduled this time, that is, the global timing value, as a reference for snapshot update in the next scheduling after each snapshot update. In this way, in the next scheduling, node information corresponding to all nodes whose timing values are greater than the global timing value in the scheduling cache is incremental information for the scheduling snapshot. The timing value corresponding to each node does not need to be stored in the scheduling snapshot, thereby avoiding waste of storage resources.

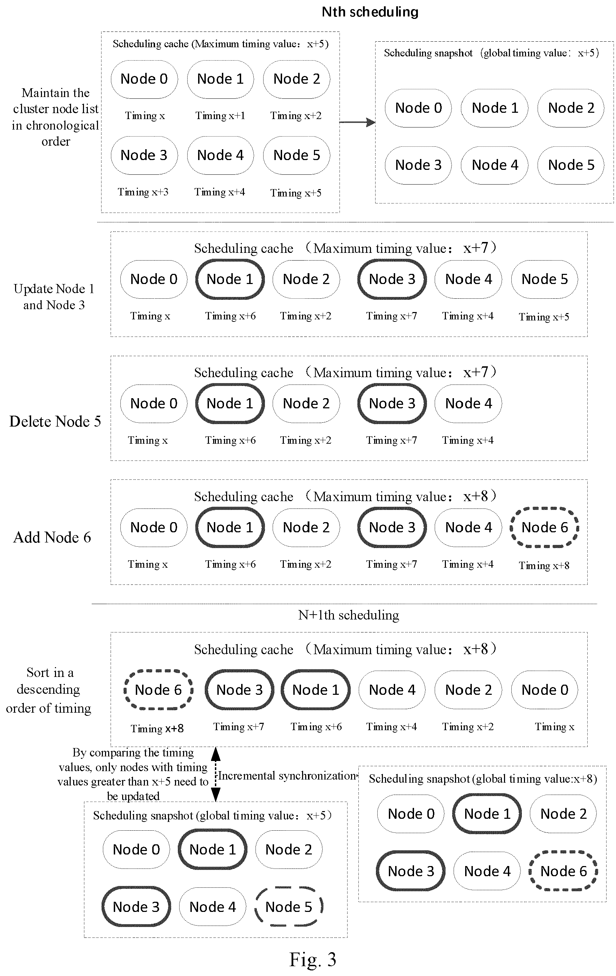

As shown in Fig. 3, not all nodes in the scheduling cache have changed between two schedules. Therefore, the changed nodes may be identified, and then the historical scheduling snapshot of the previous scheduling may be overwritten with node information of these nodes in an incremental synchronization manner, so as to meet the requirement of snapshot update. Therefore, all nodes may be maintained in the scheduling cache in the order of occurrence of node changes, and the global timing value of each scheduling is recorded in the scheduling snapshot as a reference value. Then, the timing values corresponding to the nodes that change subsequently will be greater than the reference value, thereby implementing the incremental update of the scheduling snapshot.

Exemplarily, continuing to refer to Fig. 3, the updated Node 1 and Node 3 and the newly added Node 6 will be assigned new timing values. Therefore, it is easy to perceive which nodes in the cluster are newly added nodes or updated nodes, and the snapshot information corresponding to the newly added or updated nodes may be directly incrementally updated.

Since the deleted Node 5 is no longer maintained in the scheduling cache after being deleted, the number of nodes in the scheduling cache may be compared with the number of nodes in the new scheduling snapshot after the snapshot synchronization after each scheduling to achieve the snapshot synchronization. If the number of nodes in the new scheduling snapshot is greater than the number of nodes in the scheduling cache, it means that there is a case where the node is deleted. In this case, the nodes in the scheduling cache may be compared with the nodes in the new scheduling snapshot to confirm the deleted node, and then snapshot information of the node is correspondingly deleted in the new scheduling snapshot. A random comparison manner or a sequential comparison manner may be used, which may be specifically set according to requirements and is not limited by the present disclosure. The random comparison manner means that a different node is randomly selected in the new scheduling snapshot for searching in the scheduling cache every time, until the deleted node is found.

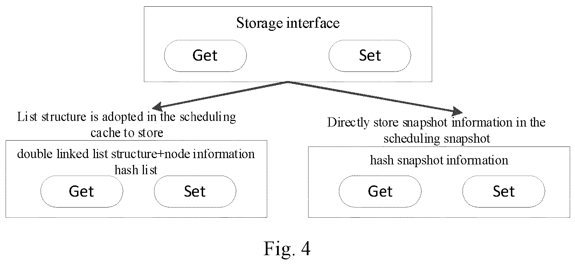

It should be noted that, as shown in Fig. 4, in the above snapshot update process, essentially, the scheduling cache and the scheduling snapshot need to expose, at the bottom layer, to a data storage layer a Get&Set (read&write) interface capable of providing storage-related operations. The difference lies in that the storage internal to the scheduling cache needs to be able to maintain timing information, for example, the timing values corresponding to the nodes may be maintained through an ordered double-linked list structure, and the node information may be stored through a hash structure, while the scheduling snapshot only concerns the snapshot information itself stored therein and does not need to maintain the timing information, thus the snapshot information may be directly stored using the hash structure. The data storage structure may be determined according to requirements, which is not limited in the present disclosure.

In this way, the incremental update of the scheduling snapshot is realized by means of timing maintenance and the double-linked list structure, the update efficiency of the scheduling snapshot is improved, and the calculation loss of the snapshot update process is reduced.

Further, to avoid complete reconstruction of the node linear list in the scheduling snapshot caused by addition or deletion of physical nodes, in a possible implementation, the method further includes: maintaining a node linear list in the historical scheduling snapshot and recording a node identifier of each node in the cluster through the node linear list; and maintaining a hash table in the historical scheduling snapshot and recording the node identifier of each node in the cluster and a list subscript of each node in the node linear list through the hash table, where the list subscript is used to identify a list position of the node in the node linear list.

Exemplarily, for the scheduling snapshot, a hash table is newly added on the basis of the snapshot information stored in the hash structure and the node linear list used to store the physical nodes of the cluster. The hash table is used to record a node identifier of each node in the cluster corresponding to the current scheduling snapshot and a list subscript of each node in the node linear list, which is equivalent to a mapping relationship between the node identifier of the node and the corresponding list position. The node linear list may not store the specific snapshot information of the node, but only store the node identifier corresponding to the node, which may be specifically set according to requirements, and is not limited in the present disclosure.

In a possible implementation, the method further includes: recording a node identifier of a newly added node at an end of the node linear list based on node information of the newly added node in the scheduling snapshot of the current scheduling and recording the node identifier of the newly added node and a list subscript of the newly added node in the node linear list in the hash table.

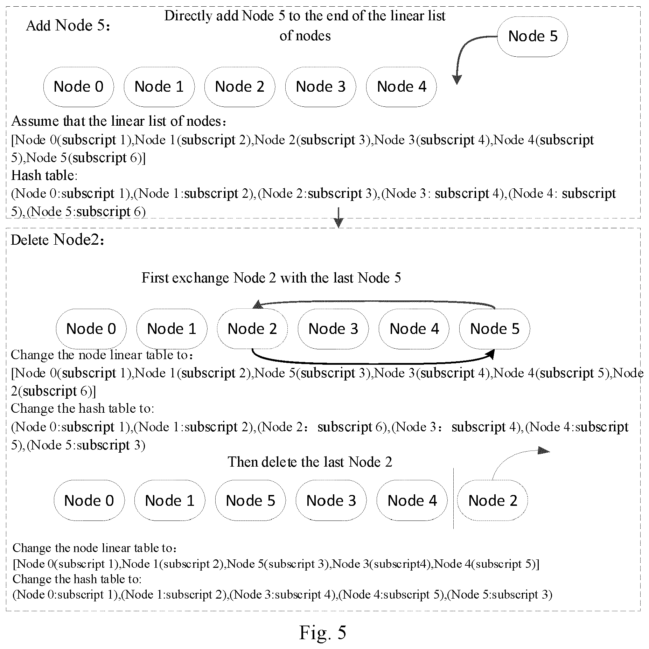

Exemplarily, as shown in Fig. 5, for the newly added Node 5, the node identifier corresponding to the newly added Node 5 may be directly appended to the end of the node linear list, and the node identifier and the corresponding list subscript corresponding to the Node 5 are recorded in the hash table. In this way, the node addition operation to the node linear list may be realized without reconstructing the node linear list.

In a possible implementation, the method further includes: in response to a number of nodes in the node linear list being greater than a number of nodes in the cluster during the current scheduling, determining a deleted node in the cluster; and deleting a node identifier corresponding to the deleted node in the node linear list and deleting the node identifier of the deleted node and a list subscript of the deleted node in the node linear list in the hash table.

Exemplarily, since the node is no longer maintained in the scheduling cache after the node is deleted in the scheduling cache, whether there is a deleted node may be determined by comparing the number of the nodes in the node linear list after snapshot update with the number of the nodes in the scheduling cache. If there is a deleted node, the deleted node may be determined according to a random comparison manner or a sequential comparison manner. Then, the node identifier corresponding to the deleted node is deleted in the node linear list after snapshot update, and the node identifier of the deleted node and its list subscript in the hash table are synchronously deleted.

In a possible implementation, the deleting a node identifier corresponding to the deleted node in the node linear list includes: exchanging a node identifier corresponding to an end node in the node linear list with the node identifier corresponding to the deleted node to obtain a node exchange list; and deleting a node identifier corresponding to an end node in the node exchange list.

Exemplarily, as shown in Fig. 5, taking the deletion of Node 2 as an example, direct deletion may result in empty data in the node linear list. Therefore, the Node 2 to be deleted may be exchanged with the Node 5 at the end of the node linear list, so that the Node 2 is placed at the end of the node linear list, that is, the subscript of the Node 2 becomes 6, and the subscript of the Node 5 becomes 3. Then, the Node 2 at the end of the list in the node linear list is directly deleted, and the hash table is updated, so that the node deletion operation is quickly completed by replacing the node subscript without reconstructing the node linear list, thereby improving the update efficiency of the node linear list.

With the above method, in the scenario of adding and deleting nodes, the node linear list may be efficiently and dynamically maintained based on the hash table, which can not only effectively reduce the calculation amount, but also realize the update of the node linear list without completely reconstructing the node linear list, thereby optimizing the scheduling performance of the scheduling controller.

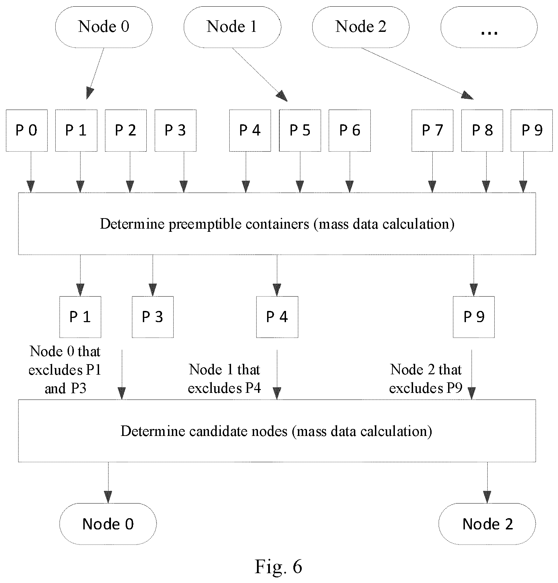

When the scheduling controller fails in scheduling, a corresponding preemption process is triggered. In the related art, as shown in Fig. 6, taking a containerized cluster including nodes such as Node 0 (including container P0-3), Node 1 (including container P4-6), and Node 2 (including container P7-9) and a to-be-scheduled object being a to-be-scheduled container as an example, a preemption attempt is first performed concurrently on the plurality of nodes, and then for each node, all containers in the node are compared with the to-be-scheduled container one by one to determine a preemptable container, usually by comparing priorities of the containers, that is, the priority of the to-be-scheduled container needs to be higher than the priority of the preemptable container. Then, it is assumed that the node after the preemptable container is removed, and whether the resources released by the node can meet the resources required by the to-be-scheduled container is determined, and the node that can meet the requirement is determined as the candidate node. Then, all candidate nodes are gathered, and an optimal node is selected therefrom as a target preemption node. A specific selection rule may be set according to requirements, for example, a candidate node with a lower priority of the preemptable container may be preferentially selected, etc., which is not limited by the present disclosure.

In the above preemption process, the cluster scheduler needs to determine the preemptable node and the removable container based on full-scale nodes and through a large amount of calculation logic, which may generate a large amount of calculation in a large-scale cluster.

Therefore, in a possible implementation, the method further includes: sorting existing objects of each node in the cluster in advance according to object priorities and recording a maximum releasable resource amount of an existing object whose priority is less than or equal to a corresponding priority based on a sorting position; in response to a target object in the to-be-scheduled object failing to be scheduled, determining an object priority and a resource occupation amount corresponding to the target object; and for each node in the cluster, according to a target sorting position of the object priority corresponding to the target object at the node, determining a maximum releasable resource amount corresponding to the target sorting position, and in response to the maximum releasable resource amount being greater than or equal to the resource occupation amount corresponding to the target object, initiating a preemption process for the existing object whose object priority is lower than the object priority corresponding to the target object in the node, or in response to the maximum releasable resource amount being less than the resource occupation amount corresponding to the target object, not requiring to initiate the preemption process.

It should be noted that, continuing to take the containerized cluster including nodes such as Node 0 (including container P0-3), Node 1 (including container P4-6), and Node 2 (including container P7-9) and the to-be-scheduled object being the to-be-scheduled container as an example, since the calculation logic for determining the preemptable container and the candidate node is preset, the purpose of reducing the loss of computing resources can be achieved by reducing the scale of data participating in the calculation logic.

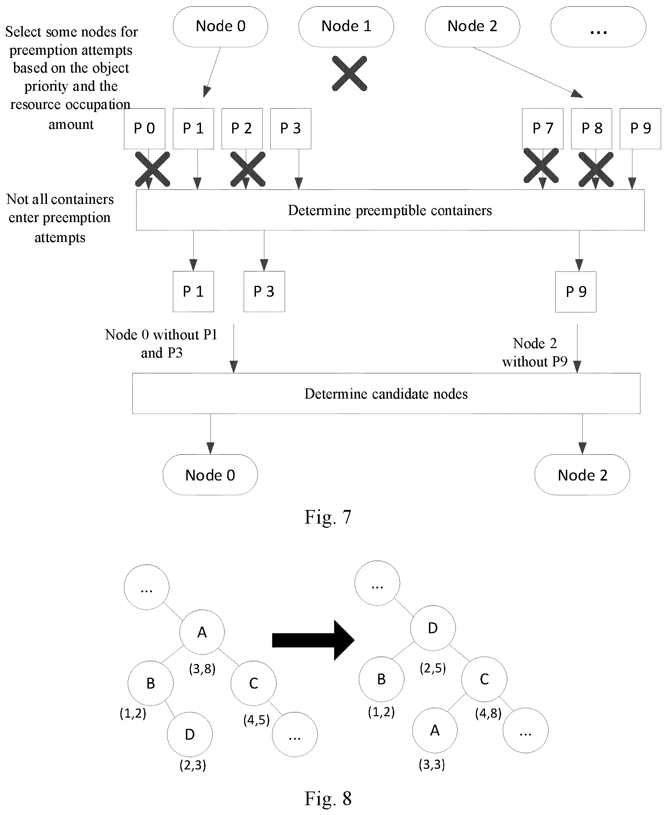

Exemplarily, for each node of the cluster, the containers in the node are sorted in advance according to corresponding container priorities, and a total releasable resource amount of the container whose priority is less than or equal to the priority corresponding to the current position is recorded based on the sorting position, that is, the maximum releasable resource amount. In this way, according to the priority of the to-be-scheduled container, for example, the node containers are arranged in ascending order according to the priority, the last position whose priority is less than the priority of the to-be-scheduled container is found, and the maximum releasable resource amount corresponding to this position represents the maximum resource amount that the node can release through preemption. If this resource amount cannot meet the scheduling requirement of the to-be-scheduled container, the node will definitely fail in preemption, so the node does not need to perform subsequent preemption attempts, such as Node 2 shown in Fig. 7, so that the scale of Nodes participating in the calculation logic can be reduced. Correspondingly, if the requirement is met, the node is used as the candidate node to perform the preemption attempt.

Correspondingly, since the containers in the node are sorted in advance according to the corresponding container priorities, after the candidate node participating in the preemption attempt is determined, the containers in the candidate node whose priorities are lower than the priority of the to-be-scheduled container may be selected to perform the subsequent preemption attempt, such as P1, P3 and P9 shown in Fig. 7, so that the to-be-scheduled container does not need to be compared with the containers in the node one by one, and the scale of Pods participating in the calculation logic is effectively reduced.

However, since the Pods on the Node may be dynamically added and deleted at a very high frequency, in a possible implementation, the method further includes: for each node in the cluster, orderly and dynamically maintaining the existing object in the node and a total releasable resource amount corresponding to the existing object by using a balanced binary search tree according to the object priorities. The according to a target sorting position of the object priority corresponding to the target object at the node, determining a maximum releasable resource amount corresponding to the target sorting position includes: determining a target tree node corresponding to the target object according to the balanced binary search tree of the node and determining a total releasable resource amount of the target tree node as the maximum releasable resource amount corresponding to the target sorting position.

Exemplarily, for each node in the cluster, a balanced binary search tree (Balanced Binary Search Tree) is constructed based on object priorities corresponding to the objects in the node, where a tree node in the tree structure corresponds to an object in the node, an object priority corresponding to a right node of any tree node in the tree structure is greater than an object priority corresponding to any left node of the tree node, and the total releasable resource amount corresponding to each tree node is used to characterize a sum of resource occupation of the object corresponding to the tree node and objects corresponding to left nodes of the tree node.

It should be noted that the balanced binary search tree can automatically balance the nodes to keep the height of the tree as low as possible while maintaining the search characteristics of the binary search tree. Since the height of the tree is low, the time complexity of the search, insertion, and deletion operations can be maintained at O(n), thereby reducing the computing resources required to maintain the orderliness of the objects in the nodes. Certainly, other tree structures may also be selected, which may be specifically selected according to requirements, and the present disclosure does not limit this.

Exemplarily, the tree structure shown in Fig. 8 is a part of sub-trees in a balanced binary search tree constructed based on objects in a certain node. The left number in the parentheses represents the object priority corresponding to the tree node, and the right number represents the total releasable resource amount corresponding to the tree node.

Exemplarily, based on the balanced binary search tree corresponding to the node, the target tree node corresponding to the object with the highest object priority among objects whose object priorities are less than the to-be-scheduled object can be quickly found. As shown in Fig. 8, assuming that the target tree node is found by the tree node D, the tree node B whose object priority is lower than the object priority of the target tree node is adjusted to be the left node of the target tree node D. Then, the total releasable resource amount corresponding to each tree node in the new balanced binary search tree is updated, and the total releasable resource amount corresponding to the target tree node D is determined as the maximum releasable resource amount corresponding to the target sorting position, so that whether the maximum releasable resource amount is greater than or equal to the resource occupation amount corresponding to the target object can be quickly judged.

In other possible implementations, since not all objects whose priorities are lower than the priority of the target object will be preempted in a case where the maximum releasable resource amount is greater than or equal to the resource occupation amount corresponding to the target object, for each candidate node, an object with a lower object priority may be preferentially selected as a preemptable object from objects whose object priorities are less than the to-be-scheduled object. There may be one or more preemptable objects, as long as the resource occupation amount of the preemptable object is greater than or equal to the resource occupation amount corresponding to the target object. Then, all the candidate nodes are gathered, and an optimal node is selected therefrom as the target preemption node. A specific selection rule may be set according to requirements, for example, a candidate node with a lower priority of the preemptable container may be preferentially selected, etc., which is not limited by the present disclosure.

With the above method, the physical nodes in the cluster and the associated node information are maintained based on the balanced binary search tree, which can convert the problem of calculating the sum of the resources of the objects in the node into an interval sum problem, and then convert the interval sum problem into a structured sub-tree sum problem. By using the balanced binary search tree, the orderliness of the objects in the nodes can be maintained while the sub-tree property is maintained, that is, the total releasable resource amount corresponding to the tree node is calculated, so that the balanced binary search tree can be dynamically adjusted through node adjustment operations, and the total releasable resource amount corresponding to the tree node is obtained through the sub-tree sum, thereby realizing efficient calculation pruning operations and reducing the calculation loss of the preemption process.

Therefore, by optimizing snapshot update and the preemption process in the scheduling process, the cluster scheduler can also run efficiently and stably when scheduling a large-scale cluster, thereby effectively improving the scheduling throughput of the cluster scheduler.

Based on the same concept, an embodiment of the present disclosure provides a cluster-based scheduling apparatus. The cluster-based scheduling apparatus 900 includes:
an obtaining module 901, configured to in response to a current scheduling, obtain a historical scheduling snapshot generated in a previous scheduling and read a global timing value corresponding to a cluster during the previous scheduling from the historical scheduling snapshot, where the global timing value is a latest change timing of a node in the cluster during the previous scheduling recorded in chronological order;
a selection module 902, configured to read a respective timing value corresponding to each node in the cluster during the current scheduling from a scheduling cache and select, using the global timing value as a reference, a target node whose timing value is later than the global timing value in chronological order, where the scheduling cache is configured to dynamically update a change timing of each node in the cluster with a change of the cluster; and
an update module 903, configured to update the historical scheduling snapshot based on node information of the target node to obtain a scheduling snapshot of the current scheduling and schedule a to-be-scheduled object based on the scheduling snapshot of the current scheduling.

Optionally, the cluster-based scheduling apparatus 900 further includes:
a first maintaining module, configured to maintain a node linear list in the historical scheduling snapshot and record a node identifier of each node in the cluster through the node linear list; and
a second maintaining module, configured to maintain a hash table in the historical scheduling snapshot and record the node identifier of each node in the cluster and a list subscript of each node in the node linear list through the hash table, where the list subscript is used to identify a list position of the node in the node linear list.

Optionally, the cluster-based scheduling apparatus 900 further includes:
an adding module, configured to record a node identifier of a newly added node at an end of the node linear list based on node information of the newly added node in the scheduling snapshot of the current scheduling and record the node identifier of the newly added node and a list subscript of the newly added node in the node linear list in the hash table.

Optionally, the cluster-based scheduling apparatus 900 further includes:
a first determining module, configured to determine a deleted node in the cluster in response to a number of nodes in the node linear list being greater than the number of nodes in the cluster during the current scheduling; and
a deleting module, configured to delete a node identifier corresponding to the deleted node in the node linear list and delete a node identifier of the deleted node and a list subscript of the deleted node in the node linear list in the hash table.

Optionally, the deleting module is configured to:
exchange a node identifier corresponding to an end node in the node linear list with the node identifier corresponding to the deleted node to obtain a node exchange list; and
delete a node identifier corresponding to an end node in the node exchange list.

Optionally, the cluster-based scheduling apparatus 900 further includes:
a sorting module, configured to sort existing objects of each node in the cluster in advance according to object priorities and record a maximum releasable resource amount of an existing object whose priority is less than or equal to a corresponding priority based on a sorting position;
a second determining module, configured to determine an object priority and a resource occupation amount corresponding to a target object in response to the target object in the to-be-scheduled object failing to be scheduled; and
a third determining module, configured to, for each node in the cluster, according to a target sorting position of the object priority corresponding to the target object at the node, determine a maximum releasable resource amount corresponding to the target sorting position, and in response to the maximum releasable resource amount being greater than or equal to the resource occupation amount corresponding to the target object, initiate a preemption process for an existing object whose object priority is lower than the object priority corresponding to the target object in the node, or in response to the maximum releasable resource amount being less than the resource occupation amount corresponding to the target object, not requiring to initiate the preemption process.

Optionally, the cluster-based scheduling apparatus 900 further includes:
a third maintaining module, configured to, for each node in the cluster, orderly and dynamically maintain the existing object in the node and a total releasable resource amount corresponding to the existing object by using a balanced binary search tree according to the object priorities; and
the third determining module is further configured to:
determine a target tree node corresponding to the target object according to the balanced binary search tree of the node and determine a total releasable resource amount of the target tree node as the maximum releasable resource amount corresponding to the target sorting position.

Optionally, the cluster is a containerized cluster and the to-be-scheduled object is a container object, or the cluster is a virtualized cluster and the to-be-scheduled object is a virtual machine object.

Based on the same concept, an embodiment of the present disclosure further provides a computer-readable medium having a computer program stored thereon, where the computer program, in response to being executed by a processing apparatus, implements steps of the above cluster-based scheduling method.

Based on the same concept, an embodiment of the present disclosure further provides an electronic device, which may include:
a storage apparatus having a computer program stored thereon; and
a processing apparatus, configured to execute the computer program in the storage apparatus to implement steps of the above cluster-based scheduling method.

Based on the same concept, an embodiment of the present disclosure further provides a computer program product, including a computer program, where the computer program, in response to being executed by a processor, implements steps of the above cluster-based scheduling method.

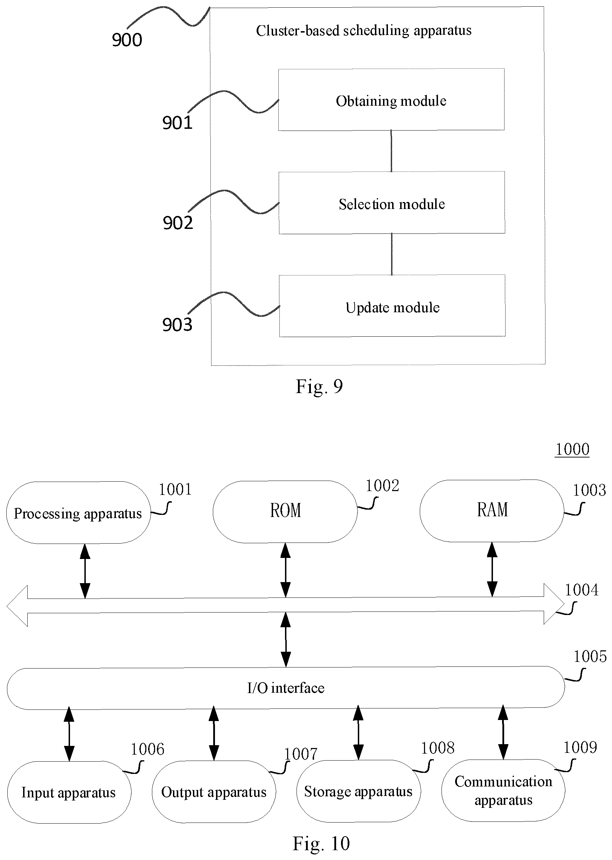

Reference is made to Fig. 10 below, which illustrates a schematic diagram of a structure of an electronic device 1000 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer (PAD), a portable media player (PMP), and an in-vehicle terminal (such as an in-vehicle navigation terminal), and fixed terminals such as a digital TV and a desktop computer. The electronic device shown in Fig. 10 is only an example, and should not impose any limitation on the function and scope of use of the embodiments of the present disclosure.

As shown in Fig. 10, the electronic device 1000 may include a processing apparatus (such as a central processing unit, a graphics processor, etc.) 1001, which may perform various appropriate actions and processing according to a program stored in a read-only memory (ROM) 1002 or a program loaded from a storage apparatus 1008 into a random access memory (RAM) 1003. The RAM 1003 further stores various programs and data required for the operation of the electronic device 1000. The processing apparatus 1001, the ROM 1002, and the RAM 1003 are connected to each other through a bus 1004. An input/output (I/O) interface 1005 is also connected to the bus 1004.

Usually, the following apparatuses may be connected to the I/O interface 1005: an input apparatus 1006 including, for example, a touchscreen, a touchpad, a keyboard, a mouse, a camera, a microphone, an accelerometer, a gyroscope, etc.; an output apparatus 1007 including, for example, a liquid crystal display (LCD), a speaker, a vibrator, etc.; a storage apparatus 1008 including, for example, a magnetic tape, a hard disk, etc.; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that it is not required to implement or have all of the illustrated apparatuses. Alternatively, more or fewer apparatuses may be implemented or provided.

Particularly, according to the embodiments of the present disclosure, the process described above with reference to the flowcharts may be implemented as a computer software program. For example, an embodiment of the present disclosure includes a computer program product, which includes a computer program carried on a non-transitory computer-readable medium, and the computer program includes program codes for executing the method shown in the flowcharts. In such an embodiment, the computer program may be downloaded and installed from the network through the communication apparatus 1009, or installed from the storage apparatus 1008, or installed from the ROM 1002. When the computer program is executed by the processing apparatus 1001, the above functions defined in the methods of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated in a baseband or as a part of a carrier wave, in which computer-readable program codes are carried. This propagated data signal may take many forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus or device. The program codes contained on the computer-readable medium may be transmitted by any suitable medium, including but not limited to: a wire, an optical cable, a radio frequency (RF), etc., or any suitable combination thereof.

In some implementations, any currently known or future-developed network protocol such as HTTP (HyperText Transfer Protocol) may be used for communication, and may be interconnected with digital data communication (for example, a communication network) in any form or medium. Examples of the communication network include a local area network ("LAN"), a wide area network ("WAN"), an internet (for example, the Internet) and a peer-to-peer network (for example, an ad hoc peer-to-peer network), and any currently known or future-developed network.

The above computer-readable medium may be included in the above electronic device, or may exist alone without being assembled into the electronic device.

The above computer-readable medium carries one or more programs, and when the above one or more programs are executed by the electronic device, the electronic device is caused to: in response to a current scheduling, obtain a historical scheduling snapshot generated in a previous scheduling and read a global timing value corresponding to a cluster during the previous scheduling from the historical scheduling snapshot, where the global timing value is a latest change timing of a node in the cluster during the previous scheduling recorded in chronological order; read a respective timing value corresponding to each node in the cluster during the current scheduling from a scheduling cache and select, using the global timing value as a reference, a target node whose timing value is later than the global timing value in chronological order, where the scheduling cache is configured to dynamically update a change timing of each node in the cluster with a change of the cluster; and update the historical scheduling snapshot based on node information of the target node to obtain a scheduling snapshot of the current scheduling and schedule a to-be-scheduled object based on the scheduling snapshot of the current scheduling.

The computer program codes for performing the operations of the present disclosure may be written in one or more programming languages or a combination thereof. The above-mentioned programming languages include object-oriented programming languages such as Java, Smalltalk, C++, and also include conventional procedural programming languages such as "C" language or similar programming languages. The program codes may be executed entirely on the user's computer, partly on the user's computer, as a stand-alone software package, partly on the user's computer and partly on a remote computer, or entirely on the remote computer or server. In the scenario involving the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules involved in the embodiments of the present disclosure may be implemented in software or hardware. The name of a module does not constitute a limitation of the module itself under certain circumstances.

The functions described herein above may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description is only preferred embodiments of the present disclosure and an illustration of applied technical principles. Those skilled in the art should understand that the scope of disclosure involved in the present disclosure is not limited to the technical solutions formed by the specific combination of the above technical features, but also covers other technical solutions formed by any combination of the above technical features or their equivalent features without departing from the above disclosed concept, such as the technical solutions formed by replacing the above features with the technical features with similar functions disclosed in the present disclosure (but not limited to).

In addition, although operations are depicted in a particular order, this should not be understood as requiring these operations to be performed in the specific order shown or in a sequential order. Under certain circumstances, multi-object and parallel processing may be advantageous. Similarly, although the above discussion contains several specific implementation details, these should not be interpreted as limiting the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.

Although the subject matter has been described in language specific to structural features and/or method logical actions, it should be understood that the subject matter defined in the appended claims is not necessarily limited to the specific features or actions described above. Rather, the specific features and actions described above are only example forms for implementing the claims. Regarding the apparatus in the above embodiments, the specific manner in which each module performs the operation has been described in detail in the embodiments related to the method, and will not be described in detail here.

## Claims

1. A cluster-based scheduling method, comprising:
in response to a current scheduling, obtaining a historical scheduling snapshot generated in a previous scheduling and reading a global timing value corresponding to a cluster during the previous scheduling from the historical scheduling snapshot (S101), wherein the global timing value is a latest change timing of a node in the cluster during the previous scheduling recorded in chronological order;
reading a respective timing value corresponding to each node in the cluster during the current scheduling from a scheduling cache and selecting, using the global timing value as a reference, a target node whose timing value is later than the global timing value in chronological order (S102), wherein the scheduling cache is configured to dynamically update a change timing of each node in the cluster with a change of the cluster; and
updating the historical scheduling snapshot based on node information of the target node to obtain a scheduling snapshot of the current scheduling and scheduling a to-be-scheduled object based on the scheduling snapshot of the current scheduling (S103).

2. The cluster-based scheduling method according to claim 1, further comprising:
maintaining a node linear list in the historical scheduling snapshot and recording a node identifier of each node in the cluster through the node linear list; and
maintaining a hash table in the historical scheduling snapshot and recording the node identifier of each node in the cluster and a list subscript of each node in the node linear list through the hash table, wherein the list subscript is used to identify a list position of the node in the node linear list.

3. The cluster-based scheduling method according to claim 2, further comprising:
recording a node identifier of a newly added node at an end of the node linear list based on node information of the newly added node in the scheduling snapshot of the current scheduling and recording the node identifier of the newly added node and a list subscript of the newly added node in the node linear list in the hash table.

4. The cluster-based scheduling method according to claim 3, further comprising:
in response to a number of nodes in the node linear list being greater than a number of nodes in the cluster during the current scheduling, determining a deleted node in the cluster; and
deleting a node identifier corresponding to the deleted node in the node linear list and deleting the node identifier of the deleted node and a list subscript of the deleted node in the node linear list in the hash table.

5. The cluster-based scheduling method according to claim 4, wherein the deleting a node identifier corresponding to the deleted node in the node linear list comprises:
exchanging a node identifier corresponding to an end node in the node linear list with the node identifier corresponding to the deleted node to obtain a node exchange list; and
deleting a node identifier corresponding to an end node in the node exchange list.

6. The cluster-based scheduling method according to any one of claims 1 to 5, further comprising:
sorting existing objects of each node in the cluster in advance according to object priorities and recording a maximum releasable resource amount of an existing object whose priority is less than or equal to a corresponding priority based on a sorting position;
in response to a target object in the to-be-scheduled object failing to be scheduled, determining an object priority and a resource occupation amount corresponding to the target object; and
for each node in the cluster, according to a target sorting position of the object priority corresponding to the target object at the node, determining a maximum releasable resource amount corresponding to the target sorting position, and in response to the maximum releasable resource amount being greater than or equal to the resource occupation amount corresponding to the target object, initiating a preemption process for an existing object whose object priority is lower than the object priority corresponding to the target object in the node, or in response to the maximum releasable resource amount being less than the resource occupation amount corresponding to the target object, not requiring to initiate the preemption process.

7. The cluster-based scheduling method according to claim 6, further comprising:
for each node in the cluster, orderly and dynamically maintaining the existing object in the node and a total releasable resource amount corresponding to the existing object by using a balanced binary search tree according to the object priorities; and
the according to a target sorting position of the object priority corresponding to the target object at the node, determining a maximum releasable resource amount corresponding to the target sorting position comprises:
determining a target tree node corresponding to the target object according to the balanced binary search tree of the node and determining a total releasable resource amount of the target tree node as the maximum releasable resource amount corresponding to the target sorting position.

8. The cluster-based scheduling method according to any one of claims 1 to 5, wherein the cluster is a containerized cluster and the to-be-scheduled object is a container object, or the cluster is a virtualized cluster and the to-be-scheduled object is a virtual machine object.

9. A cluster-based scheduling apparatus (900), comprising:
an obtaining module (901), configured to in response to a current scheduling, obtain a historical scheduling snapshot generated in a previous scheduling and read a global timing value corresponding to a cluster during the previous scheduling from the historical scheduling snapshot, wherein the global timing value is a latest change timing of a node in the cluster during the previous scheduling recorded in chronological order;
a selection module (902), configured to read a respective timing value corresponding to each node in the cluster during the current scheduling from a scheduling cache and select, using the global timing value as a reference, a target node whose timing value is later than the global timing value in chronological order, wherein the scheduling cache is configured to dynamically update a change timing of each node in the cluster with a change of the cluster; and
an update module (903), configured to update the historical scheduling snapshot based on node information of the target node to obtain a scheduling snapshot of the current scheduling and schedule a to-be-scheduled object based on the scheduling snapshot of the current scheduling.

10. A computer-readable medium having a computer program stored thereon, wherein the computer program, in response to being executed by a processing apparatus, implements steps of the method according to any one of claims 1 to 8.

11. An electronic device (1000), comprising:
a storage apparatus (1008) having a computer program stored thereon; and
a processing apparatus (1001), configured to execute the computer program in the storage apparatus (1008) to implement steps of the method according to any one of claims 1 to 8.

12. A computer program product, comprising a computer program, wherein the computer program, in response to being executed by a processor, implements steps of the method according to any one of claims 1 to 8.
